# EUROPÄISCHE PATENTANMELDUNG

(11) **EP 0 806 782 A2**
(43) Veröffentlichungstag der Anmeldung: **12.11.1997**
(21) Anmeldenummer: 97107414.1
(22) Anmeldetag: 06.05.1997
(51) Int. Cl.: H01H 11/04, B23K 1/00

(54) **Verfahren zum Verbinden einer Lotfolie mit Kontaktplättchen für elektrische Schaltgeräte**

(30) Priorität: 06.05.1996 DE 19617974
(71) Anmelder: DODUCO GmbH, 75181 Pforzheim (DE)
(72) Erfinder: Krug, Hans, Dr., 75210 Keltern (DE); Bauer, Klaus, 75331 Engelsbrand (DE)
(74) Vertreter: Twelmeier, Ulrich, Dipl.Phys.

(57) **Zusammenfassung**

Kontaktplättchen (6) für elektrische Schaltgeräte werden mit einer Lotfolie (1) durch elektrisches Widerstandsschweißen verbunden.

## Beschreibung

Kontaktplättchen für elektrische Schaltgeräte werden auf Kontaktträger, z.B. auf Schalthebel gelötet. Zu diesem Zweck ist es bereits bekannt, ein Lotmetall, z.B. ein Silberhartlot, auf die Lötfläche vom Kontaktplättchen aufzubringen. Die beloteten Kontaktplättchen müssen dann nur noch auf die dafür vorgesehenen Kontaktträger aufgelegt und über die Liquidustemperatur des Lotmetalls erwärmt werden, um sie mit dem Kontaktträger zu verbinden.

Bisher wird die dünne Lotschicht als Stanzte vorgeformt, auf die lötfähige Seite des Kontaktplättchens gelegt und in einem Ofen auf das Kontaktplättchen aufgeschmolzen, insbesondere in einem Durchlaufofen. Dadurch entsteht eine fest haftende Verbindung zwischen dem Lotmetall und den Kontaktplättchen, doch ist das geschilderte Verfahren sehr aufwendig, denn
◆ es müssen zunächst Lotformteile aus einer Lotfolie gestanzt werden,
◆ das Lotformteil muß auf der Lötfläche des betreffenden Kontaktplättchens exakt positioniert werden,
◆ es müssen Vorkehrungen getroffen werden, daß das Lotformteil auf seinem Weg in den Durchlaufofen nicht vom Kontaktplättchen heruntergleitet,
◆ das Auflegen der Lotformteile auf die Kontaktplättchen erfolgt entweder von Hand und ist dann arbeitsaufwendig oder es erfolgt mit einem Roboter, der teuer und störungsanfällig ist,
◆ für das Aufschmelzen der Lotformteile sind Schablonen erforderlich, um zu verhindern, daß das schmelzflüssige Lot über die Ränder der Kontaktplättchen läuft, und
◆ das Aufschmelzen im Durchlaufofen an sich ist aufwendig.
◆ Hinzu kommt, daß die durch das Aufschmelzen und Erstarren im Durchlaufofen entstehende Lotschicht nicht optimal ist, denn
◆ sie weist eine starke Porosität auf und
◆ sie erstarrt unter dem Einfluß ihrer Oberflächenspannung nicht exakt eben sondern ballig, und das kann einerseits ein Überschreiten der vorgeschriebenen Dickentoleranz und Probleme beim lagerichtigen Fixieren der beloteten Kontaktplättchen vor dem Löten auf Kontaktträger bewirken (das Kontaktplättchen wackelt auf dem Kontaktträger).

Der vorliegenden Erfindung liegt die **Aufgabe** zugrunde, einen Weg aufzuzeigen, wie man das Beloten von Kontaktplättchen weniger aufwendig gestalten und gleichzeitig die Maßhaltigkeit der Lotschicht verbessern kann.

Diese Aufgabe wird gelöst durch ein Verfahren mit den im Anspruch 1 angegebenen Merkmalen sowie durch belotete Kontaktplättchen mit den im Anspruch 18 angegebenen Merkmalen. Vorteilhafte Weiterbildungen der Erfindung sind Gegenstand der abhängigen Ansprüche.

Erfindungsgemäß wird auf das Aufschmelzen eines Lotformteils im Durchlaufofen vollständig verzichtet. Statt dessen werden Lotformteile oder Lotfolien mittels Widerstandsschweißen an die Lötfläche von Kontaktplättchen geheftet. Die erfindungsgemäße Vorgehensweise hat wesentliche Vorteile:
◆ Es wird kein Durchlaufofen benötigt.
◆ Die statt eines Durchlaufofens erforderliche Schweißzange samt Nebenaggregaten ist apparativ weniger aufwendig als ein Durchlaufofen.
◆ Der Energieverbrauch ist geringer. Die Kontaktplättchen und die Lotformteile müssen nicht insgesamt über die Liquidustemperatur des Lotmetalls erwärmt werden.
◆ Da das Lotformteil nicht mehr auf das Kontaktplättchen aufgeschmolzen wird, benötigt man keine Schablonen, die ein Verlaufen des Lotes verhindern.
◆ Da das Lotformteil nicht mehr auf das Kontaktplättchen aufgeschmolzen wird, wird es nicht porös. Dadurch wird die spätere Verbindung mit einem Kontaktträger qualitativ hochwertiger.
◆ Weil das Lotformteil nicht aufgeschmolzen wird, bleibt es maßhaltig.
◆ Da das Lotmetall nicht aufgeschmolzen wird, ergibt sich die Möglichkeit, anstelle einzelner Lotformteile ein Band aus Lotmetall einzusetzen. Die Verwendung eines solchen Bandes hat wesentliche zusätzliche Vorteile:
◆ Sie erleichtert das Automatisieren des Zuführens der Lotfolie, das Positionieren in der Schweißzange und die Weiterverarbeitung der mit Lot versehenen Kontaktplättchen ungemein.
◆ Bei Verwendung eines Bandes als Lotfolie kann dieses Fanglöcher für einen schrittweisen Vorschub und ein exaktes Positionieren aufweisen.
◆ Bei Verwendung eines Bandes als Lotfolie können die einzelnen Kontaktplättchen auf das Band aufgeschweißt und beim nachfolgenden Auflöten auf Kontaktträger der dafür vorgesehenen Löt- oder Schweißvorrichtung als bandförmiges Halbzeug zugeführt werden, wodurch das Auflöten oder Aufschweißen auf Kontaktträger leichter automatisiert und verbilligt werden kann.
◆ Aus Lotfolie gebildetes Band mit aufgeschweißten Kontaktplättchen kann in Gestalt von geraden Bandabschnitten oder aufgewickelt, auf Rollen zwischengelagert, als Halbzeug in den Handel gebracht und von der Rolle verarbeitet werden.
◆ Es ist aber auch möglich, aus Lotfolie gebildete Bänder mit aufgeschweißten Kontaktplättchen unmittelbar nach dem Aufschweißen der Kontaktplättchen einer benachbarten Löt- oder Schweißvorrichtung zuzuführen, um die beloteten Kontaktplättchen mit Kontaktträgern zu verbinden.
◆ Eine bandförmige Lotfolie kann mit Vorteil auch dann eingesetzt werden, wenn es darum geht, belotete Kontaktplättchen als Einzelteile zu bilden. In diesem Fall kann man die Vereinzelung durch Abtrennen vom Band im Bereich des Schweißwerkzeugs unmittelbar vor oder nach dem Verschweißen vornehmen.

Für die auf die Lotfolie aufzusetzende Aufsetzfläche einer Schweißelektrode sind unterschiedliche Geometrien möglich. Bei kleinen Kontaktplättchen kann man eine Punktschweißelektrode verwenden oder sogar eine Schweißelektrode, deren Aufsetzfläche annähernd so groß ist wie die mit der Lötfläche des Kontaktplättchens zu verbindende Lotfolie. Bei Kontaktplättchen mit größerer Lötfläche wird eine Schweißelektrode mit einer profilierten Aufsetzfläche bevorzugt, zum Beispiel mit einem oder mehreren Kreisringen oder mit einem Waffelmuster als Profilierung, um die Lotfolie nicht nur an einem Punkt, sondern an mehreren Stellen über die Lötfläche verteilt an diese anzuheften, ohne sie aufzuschmelzen, so daß ihre Maßhaltigkeit garantiert wird. Die Verwendung einer profilierten Aufsetzfläche der Schweißelektrode hat den weiteren Vorteil, daß die Lotfolie auf diese Weise mit einer maschinenlesbaren Kennung versehen werden kann, welche es einer Einlegevorrichtung ermöglicht, zwischen der Lötfläche und der Kontaktfläche des Kontaktplättchens zu unterscheiden und das Kontaktplättchen in die richtige Orientierung zu bringen. Aus demselben Grund kann es auch vorteilhaft sein, bereits das nackte, noch nicht belotete Kontaktplättchen auf seiner Lötfläche mit einer maschinell erkennbaren Kennung zu versehen.

Die Lotfolie bildet man vorzugsweise schmäler aus als das Kontaktplättchen, um zu verhindern, daß beim späteren Auflöten auf einen Kontaktträger Lotmetall über den Rand des Kontaktplättchens zur Kontaktoberfläche kriecht.

Besonders vorteilhaft ist es, als Lotfolie ein Band zu verwenden, insbesondere wenn es schmäler ist als die Kontaktplättchen, so daß diese beidseits über das Band überstehen, wenn sie auf das Band gelegt und aufeinanderfolgend mit diesem verschweißt werden. Fanglöcher für den schrittweisen Vorschub und für das exakte Positionieren des Bandes im Schweißwerkzeug sind in diesem Fall zweckmäßigerweise in der Mitte des Bandes zwischen den Kontaktplättchen vorgesehen.

Eine andere günstige Möglichkeit besteht darin, als Lotfolie ein Band mit leiterartiger Gestalt zu verwenden, mit längsverlaufenden Randstreifen und sie verbindenden Querstegen, wobei die Randstreifen vorzugsweise Fanglöcher haben, mit denen das Band vorgeschoben und exakt positioniert werden kann. Die Kontaktplättchen werden in diesem Fall auf die Querstege geschweißt und überragen diese vorzugsweise beidseitig.

In einem bandförmigen Halbzeug mit einer bandförmigen Lotfolie und darauf geschweißten Kontaktplättchen übernimmt die Lotfolie eine weitere Funktion, nämlich als bandförmiger Träger für die Kontaktplättchen zu diesen. Ein solches Halbzeug läßt sich besonders günstig lagern, transportieren, weiterverarbeiten und einem Werkzeug zuführen. Die beloteten Kontaktplättchen können unmittelbar von der Rolle verarbeitet oder in Gestalt von geraden Bandabschnitten magaziniert, aus einem Magazin heraus weiterverarbeitet und in kontrollierten Schritten einem Werkzeug zugeführt werden.

Mit Lotfolien, die zwischen 0,1 mm und 0,5 mm dick sind, kann man erfindungsgemäß gut arbeiten.

Die Erfindung kann mit gängigen Lotmetallen und Kontaktwerkstoffen ausgeführt werden. Als Kontaktwerkstoffe kommen insbesondere AgC mit senkrecht zur Kontaktfläche und zur Lötfläche verlaufender Faserstruktur und gesinterte Kontaktplättchen aus AgC, AgSnO₂, AgW, AgWC und CuW in Betracht. Als Lotmetalle kommen insbesondere Silberhartlote, auch phosphorhaltige Hartlote, welche als Schweißhilfsschicht eingesetzt werden können, in Betracht. Auch Weichlote sind verwendbar, soweit die Kontakterwärmung beim vorgesehenen Einsatzzweck hinreichend niedrig ist und nicht zu einer Schwächung der Lötverbindung führt.
- Figur 1: zeigt ein erstes Beispiel einer bandförmigen Lotfolie mit aufgeschweißten Kontaktplättchen, und
- Figur 2: zeigt ein zweites Beispiel einer bandförmigen Lotfolie mit aufgeschweißten Kontaktplättchen.

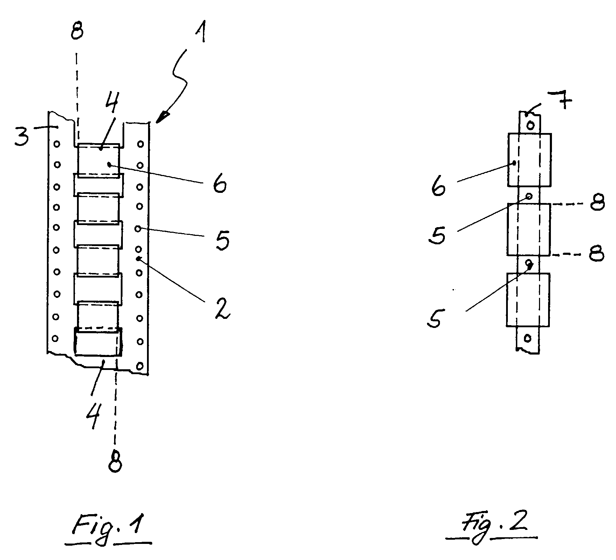

In Figur 1 ist die Lotfolie ein Band 1 mit leiterartiger Gestalt mit zwei Randstreifen 2 und 3, welche durch Querstege 4 in regelmäßigen Abständen miteinander verbunden sind. Die Randstreifen 2 und 3 haben in regelmäßigen Abständen Fanglöcher 5 für den schrittweisen Transport des Bandes 1 und dessen Positionierung in einem Schweißwerkzeug, in welchem auf die Querstege 4 rechteckige Kontaktplättchen 6 geschweißt werden, welche breiter sind als die Querstege 4, so daß sie über diese beidseitig überstehen.

Im Unterschied dazu zeigt Figur 2 als Lotfolie ein schmales Band 7, welches in der Mitte in regelmäßigen Abständen Fenglöcher 5 hat, mit denen es schrittweise einem Schweißwerkzeug zugeführt und in der Schweißzange exakt positioniert werden kann. Zwischen je zwei Fanglöchern 5 kann ein Kontaktplättchen 6 aufgeschweißt werden, welches breiter ist als das Band 7, so daß es nach dem Aufschweißen beidseitig übersteht.

In beiden Ausführungsbeispielen sind die Trennlinien, an denen die aufgeschweißten Kontaktplättchen 6 aus den Band 1 bzw. 7 ausgeschnitten und vereinzelt werden können, mit der Bezugszahl 8 bezeichnet; die Trennlinien 8 liegen am Rand der Kontaktplättchen 6.

Widerstandsschweißvorrichtungen, mit welchen die Kontaktplättchen 6 mit der Lotfolie 1 zum Ausführen der Erfindung verschweißt werden können, sind in den DE-195 29 981 A1 und DE-195 28 272 A1 offenbart.

## Patentansprüche

1. Verfahren zum Verbinden einer Lotfolie mit Kontaktplattchen, **dadurch gekennzeichnet,** daß die Lotfolie (1, 7) durch elektrisches Widerstandsschweißen mit einer Oberfläche des Kontaktplättchens (6) verbunden wird.

2. Verfahren nach Anspruch 1, **gekennzeichnet durch** die Verwendung einer Schweißelektrode, deren Aufsetzflache annähernd so groß ist wie die mit der Oberfläche zu verbindende Lotfolie.

3. Verfahren nach Anspruch 1, **gekennzeichnet durch** die Verwendung einer Punktschweißelektrode.

4. Verfahren nach Anspruch 1, **gekennzeichnet durch** die Verwendung einer Schweißelektrode mit einer profilierten Aufsetzfläche.

5. Verfahren nach Anspruch 4, **gekennzeichnet durch** die Verwendung einer Schweißelektrode, bei welcher die Profilierung der Aufsetzfläche ein Waffelmuster ist.

6. Verfahren nach Anspruch 4, **gekennzeichnet durch** die Verwendung einer Schweißelektrode, bei welcher die Profilierung der Aufsetzfläche eine maschinenlesbare Kennung beinhaltet.

7. Verfahren nach einem der vorstehenden Ansprüche, **gekennzeichnet durch** die Verwendung von Kontaktplättchen (6), deren mit der Lotfolie (1, 7) zu belegende Oberfläche mit einer maschinell erkennbaren Kennung versehen ist.

8. Verfahren nach einem der vorstehenden Ansprüche, **dadurch gekennzeichnet,** daß die Lotfolie (1, 7) dem Schweißwerkzeug als Band zugeführt und erst im Schweißwerkzeug abgetrennt wird.

9. Verfahren nach Anspruch 8, **dadurch gekennzeichnet,** daß die am Kontaktplättchen (6) verbleibende Lotfolie erst nach dem Verschweißen vom Band (1, 7) abgetrennt wird.

10. Verfahren nach Anspruch 8, **dadurch gekennzeichnet,** daß zuerst das Kontaktplättchen (6) im Schweißwerkzeug positioniert und dann die am Kontaktplättchen (6) verbleibende Lotfolie vom Band (1, 7) abgetrennt, auf die Oberfläche des Kontaktplättchens (6) geschoben und mit dieser verschweißt wird.

11. Verfahren nach Anspruch 8, 9 oder 10, **dadurch gekennzeichnet,** daß das aus der Lotfolie gebildete Band (1, 7) eine Folge von Fanglöchern (5) hat.

12. Verfahren nach Anspruch 8 oder 11, **dadurch gekennzeichnet,** daß das aus der Lotfolie gebildete Band (1, 7) nach dem Aufschweißen der Kontaktplättchen (6) aufgewickelt wird.

13. Verfahren nach Anspruch 8 oder 11, **dadurch gekennzeichnet,** daß das aus der Lotfolie gebildete Band (1, 7) nach dem Aufschweißen der Kontaktplättchen (6) in Bandabschnitte geteilt und magaziniert wird.

14. Verfahren nach Anspruch 12 oder 13, **dadurch gekennzeichnet,** daß ein Band (7) verwendet wird, welches schmäler als die Kontaktplättchen (6) ist und daß die Kontaktplättchen (6) aufeinanderfolgend so auf das Band (7) geschweißt werden, daß sie beiderseits über das Band (7) überstehen.

15. Verfahren nach Anspruch 14, **dadurch gekennzeichnet,** daß zwischen den Kontaktplättchen (6) vorzugsweise in der Mitte des Bandes (7) Fanglöcher (5) vorgesehen sind.

16. Verfahren nach Anspruch 12 oder 13, **dadurch gekennzeichnet,** daß ein leiterartiges Band (1) mit längsverlaufenden Randstreifen (2, 3) und sie verbindenden Querstegen (4) verwendet wird, wobei die Randstreifen (2, 3) Fanglöcher (5) haben.

17. Verfahren nach Anspruch 16, **dadurch gekennzeichnet,** daß die Querstege (4) schmäler als die Kontaktplättchen (6) sind, welche auf jeweils einen der Querstege (4) geschweißt werden.

18. Verfahren nach einem der vorstehenden Ansprüche, **dadurch gekennzeichnet,** daß die Lotfolie (1, 7) 0,1 mm bis 0,5 mm dick ist.

19. Kontaktplättchen für elektrische Schaltgeräte, auf welches zum späteren Verbinden mit einem Kontaktträger ein Lotmetall aufgetragen ist, **dadurch gekennzeichnet,** daß das Lotmetall in Gestalt einer Lotfolie (1, 7) durch Widerstandsschweißen mit dem Kontaktplättchen (6) verbunden ist, wodurch die aufgeschweißte Lotfolie (1, 7) zugleich mit einer maschinenlesbaren Kennung versehen ist.

20. Kontaktplättchen nach Anspruch 19, **dadurch gekennzeichnet,** daß die Kennung eine Profilierung beinhaltet.

21. Kontaktplättchen nach Anspruch 20, **dadurch gekennzeichnet,** daß die Kennung ein Waffelmuster ist.

22. Kontaktplättchen nach Anspruch 20, **dadurch gekennzeichnet,** daß die Kennung eine ringförmige oder rahmenförmige Profilierung beinhaltet.

23. Kontaktplättchen nach Anspruch 22, **dadurch gekennzeichnet,** daß die Kennung mehrere konzentrische ringförmige oder rahmenförmige, rechteckige oder quadratische Profilierungen beinhaltet.

24. Kontaktplättchen nach einem der Ansprüche 19 bis 23, **dadurch gekennzeichnet,** daß die Lotfolie (1, 7) 0,1 mm bis 0,5 mm dick ist.

25. Kontaktplättchen nach einem der Ansprüche 19 bis 24, **dadurch gekennzeichnet,** daß die Lotfolie (1, 7) aus einem Silberhartlot oder aus einem phosphorhaltigen Hartlot besteht.

26. Bandförmiges Halbzeug aus einem aus einem Lotmetall bestehenden Band (1, 7), auf welches in regelmäßigen Abständen Kontaktplättchen (6) für elektrische Schaltgeräte gemäß einem der vorstehenden Ansprüche durch Widerstandsschweißen aufgeschweißt sind.

27. Halbzeug nach Anspruch 26, **dadurch gekennzeichnet,** daß das Band (1, 7) eine Folge von Fanglöchern (5) hat.

28. Halbzeug nach Anspruch 26 oder 27, **dadurch gekennzeichnet,** daß das Band (7) schmäler als die Kontaktplättchen (6) ist und diese beiderseits über das Band (7) überstehen.

29. Halbzeug nach Anspruch 28, **dadurch gekennzeichnet,** daß zwischen den Kontaktplättchen (6) jeweils wenigstens ein Fangloch (5) vorgesehen ist, vorzugsweise in der Mitte des Bandes (7).

30. Halbzeug nach Anspruch 26 oder 27, **dadurch gekennzeichnet,** daß das Band (1) eine leiterartige Gestalt mit längsverlaufenden Randstreifen (2, 3) und sie verbindenden Querstegen (4) hat, welche schmäler sind als die auf sie aufgeschweißten Kontaktplättchen (6).

31. Halbzeug nach Anspruch 30, **dadurch gekennzeichnet,** daß das Band (1) wenigstens auf einem Randstreifen, vorzugsweise auf beiden Randstreifen (2, 3), Fanglöcher (5) hat.
